Europäisches Patentamt

(19) European Patent Office

Office européen des brevets

(11) Publication number: **0 063 161**
**A1**

(12) # EUROPEAN PATENT APPLICATION
published in accordance with Art. 158(3) EPC

(21) Application number: **81902755.8**

(22) Date of filing: **07.10.81**

Data of the international application taken as a basis:

(86) International application number:
**PCT/JP81/00266**

(87) International publication number:
**WO82/01154 (15.04.82 82/10)**

(51) Int. Cl.³: **B 25 J 15/00**

(30) Priority: **08.10.80 JP 142631/80 U**

(43) date of publication of application:
**27.10.82 Bulletin 82/43**

(84) Designated Contracting States:
**DE FR GB**

(71) Applicant: **Fanuc Limited**
**5-1, Asahigaoka, 3-chome**
**Hino-shi, Tokyo 191(JP)**

(72) Inventor: **INABA, Hajimu**
**5-3-16, Asahigaoka Hino-shi**
**Tokyo 191(JP)**

(72) Inventor: **NIHEI, Ryo**
**1-34-7-202, Honcho Kichijoji**
**Musashino-shi Tokyo 180(JP)**

(74) Representative: **Blumbach Weser Bergen Kramer**
**Zwirner Hoffmann Patentanwälte**
**Radeckestrasse 43**
**D-8000 München 60(DE)**

(54) INDUSTRIAL ROBOT.

(57) An industrial robot capable of moving a wrist along at least three shafts independent each other, in which a hand (1) connected to the wrist (2) has at least a pair of pawls (1-1, 1-2) extending parallel with one another.

Fig. I

EP 0 063 161 A1

DESCRIPTION

TITLE OF THE INVENTION
INDUSTRIAL ROBOT
TECHNICAL FIELD
The present invention relates to an industrial robot. More particularly, the present invention relates to an improvement of a robot hand of an industrial robot in which the range of application of the industrial robot is broadened.

BACKGROUND ART
For attaining unmanned automation in machining processes, one industrial robot is arranged for one or a plurality of numerically controlled machine tools so that loading and unloading of workpieces or tools to and from the machine tools can be accomplished by the industrial robot. For example, when workpieces are attached to a machine tool by an industrial robot, it is necessary to perform a preparatory operation of arranging the workpieces in order in a predetermined region, and when the workpieces have a heavy weight and it is difficult to carry them manually, a long time is required for accomplishing this preparatory operation.

The present invention has been devised in order to solve the above-mentioned problems.

DISCLOSURE OF THE INVENTION
It is an object of the present invention to provide an improved industrial robot which can easily shift objective articles, such as workpieces and pallets placed in a service region of the industrial robot, to a service region of another industrial robot, and which enables the other robot to perform subsequent service operations automatically very easily and assuredly.

According to the present invention, there is provided an industrial robot in which a wrist portion can be moved along at least three independent axes, said industrial robot being characterized in that a robot hand connected to said wrist portion is provided with at least one pair of claws extending parallel to each other.

BRIEF EXPLANATION OF THE DRAWINGS

The accompanying drawings illustrate one embodiment of the industrial robot according to the present invention.

Fig. 1 is a perspective view of the robot.

Fig. 2 is a side view of the robot hand.

Fig. 3 is a back face view of the robot hand.

Fig. 4 is a view showing the other side face of the robot hand.

BEST MODE FOR CARRYING OUT THE INVENTION

The present invention will now be described in detail with reference to an embodiment of the present invention illustrated in the accompanying drawings.

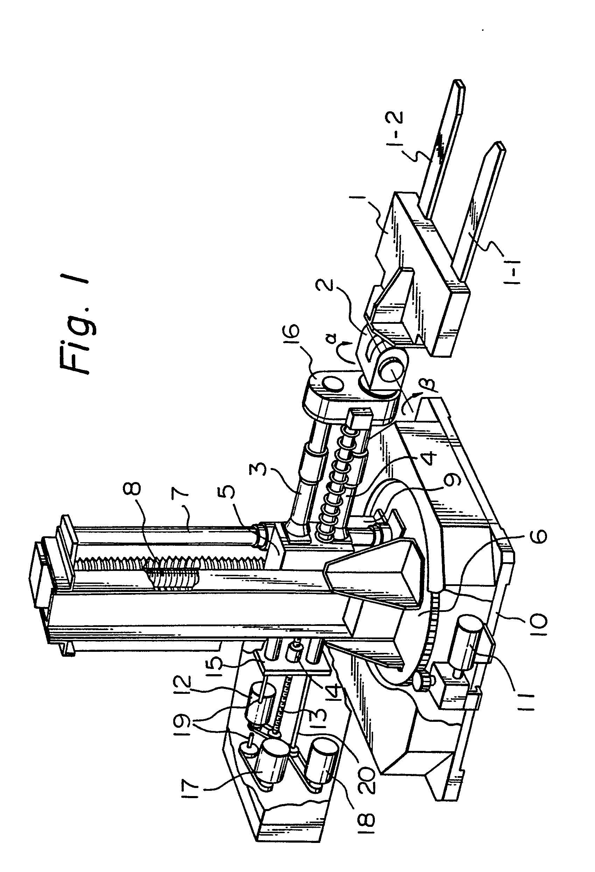

Fig. 1 is a partially cutaway perspective view illustrating one embodiment of the industrial robot according to the present invention.

In Fig. 1, reference numeral 1 represents a robot hand especially contrived according to the present invention, and this robot hand 1 is connected to a wrist portion 2.

The industrial robot has five control axes, that is, an axis extended along the vertical direction (axis Z), a turning axis which turns on a horizontal plane with respect to the vertical axis (axis θ), an axis for a robot arm(s) which extends and contracts on a horizontal plane (axis R), and two independent axes, one being a rotary axis and the other being a swinging axis for the rotary and swinging movements of the wrist portion attached to the top end portion of the robot arm(s) (axes α and β).

A box-like robot casing 5 supporting arms 3 and 4 is guided by vertical guide rods 7 arranged on a rotary base member 6, and the box-like robot casing 5 is moved along the direction of the axis Z by rotating a ball screw shaft 8 by an electric servo motor 9 for the axis Z.

A driving shaft of an electric servo motor 11 for the axis θ mounted on a base member 10 is connected to a peripheral gear of the rotary base member 6 through a gear, and by rotation of the motor 11, the box-like robot casing 5 and the arms 3 and 4 are turned along the axis θ through the rotary base member 6 and vertical guide rods 7.

An electric servo motor 12 for the axis R is arranged within the box-like robot casing 5. The rotation of the motor 12 is converted to move the arms 3 and 4 along the axis R through a ball screw shaft 13, a nut 14 and an end plate 15.

The rotary and swinging movements of the wrist portion 2, which is attached to the top end portions of the arms 3 and 4 through a reduction mechanism 16, along the axes α and β, are accomplished by electric servo motors 17 and 18 arranged in the box-like robot casing 5. More specifically, rotation of the motor 17 through a shaft 19 and rotation of the motor 18 through a shaft 20 are transmitted to the reduction mechanism 16 through the corresponding arms 3 and 4 to rotate the wrist portion 2 along the axes α and β, respectively.

In Fig. 1, the robot hand 1 is illustrated in the state where the plane of the robot hand 1, including a pair of claws 1-1 and 1-2, occupies the horizontal plane. The paired claws of the robot hand have a relatively narrow plate-like shape and they are forkedly extended parallel to each other.

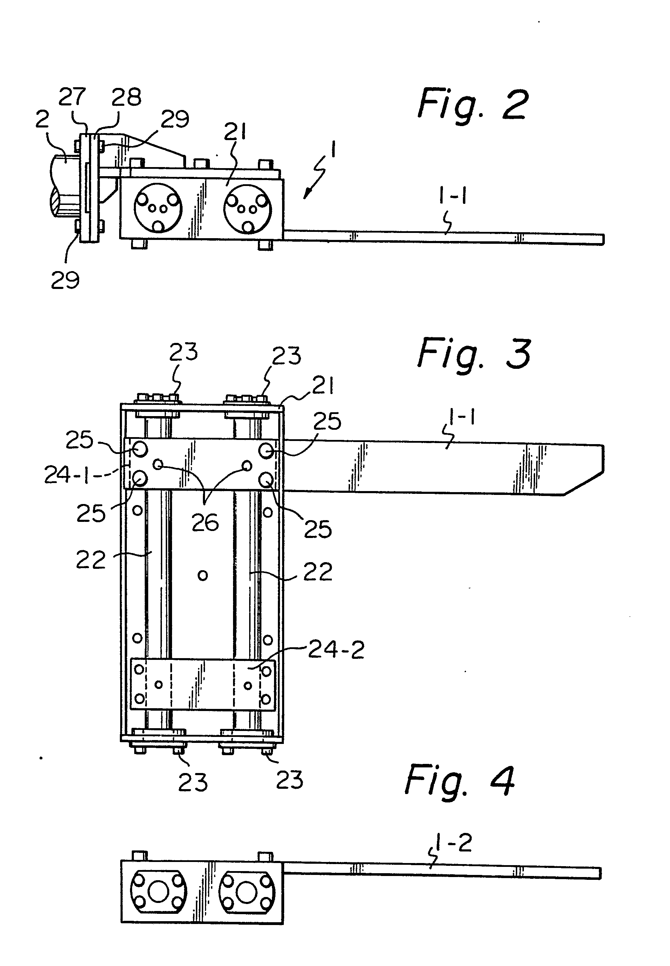

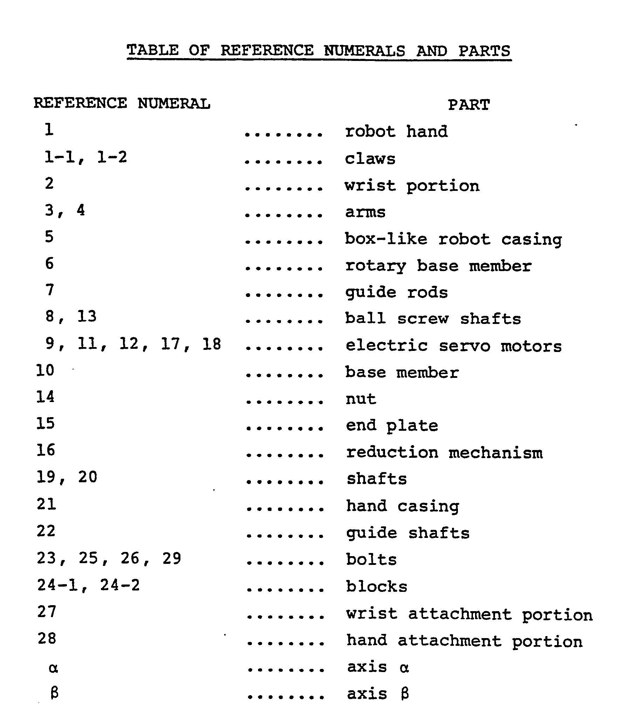

Fig. 2 is a side view of the robot hand 1 connected to the wrist portion 2; Fig. 3 is a back face view of the robot hand 1, and Fig. 4 is a view showing the other side face of the robot hand 1. As is seen from Figs. 2 through 4, a pair of guide shafts 22 are secured parallel to each other between both the side walls of a hand casing 21 by bolts 23, and a pair of blocks 24-1 and 24-2 are fitted in the shafts 22. Claws 1-1 and 1-2 are secured onto the blocks 24-1 and 24-2, respectively, by bolts 25 so that the claws 1-1 and 1-2 extend in the direction intersecting the shafts 22 at a right angle. Incidentally, the claw 1-2 is omitted in Fig. 3. The blocks 24-1 and 24-2 are slidable along the shafts 22, and after the distance between the blocks 24-1 and 24-2 has been appropriately adjusted, the blocks 24-1 and 24-2 are secured to the shafts 22 by clamping the bolts 26. Incidentally, reference numerals 27, 28 and 29 represent, respectively, a wrist attachment portion, a hand attachment portion and bolts for connecting both the attachment portions to each other.

The operation of the industrial robot of the present invention will now be described. By manual feeding instructions from an instructing operation panel (not shown), movements of the robot hand along the respective control axes are performed. More specifically, the positions of the robot hand in the directions of the axes $\alpha$ and $\beta$ are determined so that the plane of the robot hand, including the claws 1-1 and 1-2, is substantially horizontal, as shown in Fig. 1, and the claws 1-1 and 1-2 are inserted in the lower face of an objective article by movement in the direction of the axis Z and by an extending movement in the direction of the axis R. The claws 1-1 and 1-2 subsequently are elevated by a predetermined quantity along the axis Z to raise up the objective article. Then, by appropriately combining the movements along the axes Z, $\theta$ and R, the objective article is set at a predetermined position. By repeating the above procedures, objective articles are arranged and set in order on a workpiece stand or the like.

As will be apparent from the foregoing description, according to the present invention, even if objective articles are workpieces or pallets having a heavy weight, which can hardly be carried manually by operators, they can easily be shifted by being scooped up from below by the fork-shaped hand and can be arranged in order on a predetermined stand or the like. Accordingly, the preparatory operation of arranging the objective articles can remarkably be facilitated.

## CLAIMS

1.    An industrial robot in which a wrist portion can be moved along at least three independent axes, said industrial robot being characterized in that a robot hand connected to said wrist portion is provided with at least one pair of claws extending parallel to each other.

2.    An industrial robot according to claim 1, wherein said robot has a telescopic shaft or shafts in the direction of one axis of said independent axes, and said claws of said robot hand are arranged to extend parallel to said shaft or shafts.

3.    An industrial robot according to claim 2, wherein said robot has a telescopic shaft or shafts in the direction of one axis of said independent axes, another axis of said independent axes extends along the vertical direction, and still another axis of said independnet axes is a turning axis which turns on a horizontal plane in the direction of the turning movement around the vertical axis.

4.    An industrial robot according to any one of claims 1 through 3, wherein said robot hand (1) is provided on the hand casing (21) with a hand attachment portion (28) on the opposite side of the claws (1-1, 1-2).

Fig. 1

*Fig. 2*

*Fig. 3*

*Fig. 4*

0063161

## TABLE OF REFERENCE NUMERALS AND PARTS

| REFERENCE NUMERAL | PART |
|---|---|
| 1 | ........ robot hand |
| 1-1, 1-2 | ........ claws |
| 2 | ........ wrist portion |
| 3, 4 | ........ arms |
| 5 | ........ box-like robot casing |
| 6 | ........ rotary base member |
| 7 | ........ guide rods |
| 8, 13 | ........ ball screw shafts |
| 9, 11, 12, 17, 18 | ........ electric servo motors |
| 10 | ........ base member |
| 14 | ........ nut |
| 15 | ........ end plate |
| 16 | ........ reduction mechanism |
| 19, 20 | ........ shafts |
| 21 | ........ hand casing |
| 22 | ........ guide shafts |
| 23, 25, 26, 29 | ........ bolts |
| 24-1, 24-2 | ........ blocks |
| 27 | ........ wrist attachment portion |
| 28 | ........ hand attachment portion |
| $\alpha$ | ........ axis $\alpha$ |
| $\beta$ | ........ axis $\beta$ |

## I. CLASSIFICATION OF SUBJECT MATTER (if several classification symbols apply, indicate all) 3

According to International Patent Classification (IPC) or to both National Classification and IPC

Int. Cl.<sup>3</sup>  B25J 15/00

## II. FIELDS SEARCHED

### Minimum Documentation Searched 4

| Classification System | Classification Symbols |
|---|---|
| I P C | B25J 15/00, B65G 47/90 |

### Documentation Searched other than Minimum Documentation
to the Extent that such Documents are Included in the Fields Searched 5

| | | |
|---|---|---|
| Jitsuyo Shinan Koho | 1961 - 1981 | |
| Kokai Jitsuyo Shinan Koho | 1971 - 1981 | |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP,U, 49-115867 (NACHI-Fujikoshi Corp.) 3, October, 1974 (03.10.74) | 1 - 4 |
| A | JP,Y2, 53-24700 (Nagato Kinzoku Kogyo Kabushiki Kaisha)  24, June, 1978 (24.06.78) | 1 - 4 |
| A | JP,B1, 46-16041 (Nippon Typewriter Kabushiki Kaisha)  30, April, 1971 (30.04.71) | 1 - 4 |

"X"  document of particular relevance; the claimed invention cannot be considered novel or cannot be considered to involve an inventive step.

"A"  document defining the general state of the art which is not considered to be of particular relevance

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| December 18, 1981 (18.12.81) | January 18, 1982 (18.01.82) . |

| International Searching Authority 1 | Signature of Authorized Officer 20 |
|---|---|
| Japanese Patent Office | |

Form PCT/ISA/210 (second sheet) (October 1977)